# EUROPÄISCHE PATENTSCHRIFT

(11) **EP 3 817 909 B1**
(45) Veröffentlichungstag und Bekanntmachung des Hinweises auf die Patenterteilung: **04.09.2024**
(21) Anmeldenummer: 19769709.7
(22) Anmeldetag: 05.07.2019
(51) Int. Cl.: B29C 63/34, B29C 35/08

(54) **VORRICHTUNG MIT AKTIVER KÜHLUNG ZUR ANSTEUERUNG EINER STRAHLUNGSQUELLE ZUM AUSHÄRTEN VON AUSKLEIDUNGSSCHLÄUCHEN**
ACTIVE COOLING DEVICE FOR CONTROLLING A RADIATION SOURCE FOR CURING LINERS
DISPOSITIF À REFROIDISSEMENT ACTIF POUR COMMANDER UNE SOURCE DE RAYONNEMENT AUX FINS DE DURCISSEMENT DE CHEMISES

(30) Priorität: 05.07.2018 DE 102018116311
(43) Veröffentlichungstag der Anmeldung: 12.05.2021
(73) Patentinhaber: SML Verwaltungs GmbH, 76865 Rohrbach (DE)
(72) Erfinder: WIND, Herbert, 76857 Albersweiler (DE)
(74) Vertreter: Dr. Langfinger & Partner
(86) Internationale Anmeldenummer: PCT/DE2019/100633
(87) Internationale Veröffentlichungsnummer: WO 2020/007421

(56) Entgegenhaltungen:
- EP-A1- 3 336 404

## Beschreibung

Die vorliegende Erfindung betrifft eine Vorrichtung zur Ansteuerung einer Strahlungsquelle zum Aushärten von Auskleidungsschläuchen.

Zur Inspektion, Wartung und Sanierung von Leitungen, Kanalsystemen, und dergleichen werden oftmals Vorrichtungen in die Leitungen eingeführt, um die erforderlichen Messvorgänge und/oder mechanischen Sanierungsarbeiten auszuführen. Zur Messung der Ist-Situation einer Leitung weisen die Vorrichtungen meist Kamerasysteme auf, um den Zustand der Leitung zu visualisieren.

Wird ein Defekt oder eine Beschädigung erkannt, kann der entsprechende Abschnitt des Leitungssystems durch neue Abschnitte ersetzt werden. Dies ist jedoch in der Regel sehr aufwendig.

Alternativ sind Verfahren im Stand der Technik bekannt, bei denen zur Sanierung von Leitungssystemen, z.B. von Kanälen und ähnlichen Rohrsystemen, eine flexible, mit einer mit härtbarem Harz getränkten aushärtbaren Lage, die als Auskleidungsschlauch oder auch als Liner bezeichnet wird, in das Leitungssystem eingeführt wird. Nach dem Einführen wird der Auskleidungsschlauch aufgeweitet, so dass er sich eng an die Innenwand des Leitungssystems anschmiegt. Anschließend wird das Harz ausgehärtet.

Die Herstellung eines derartigen Auskleidungsschlauches ist beispielsweise in der WO 95/04646 beschrieben. Als härtbare Harze werden nach den bekannten Verfahren vorzugsweise ungesättigte Polyesterharze, Vinylesterharze oder Epoxidharze verwendet, die beispielsweise in Styrol und/oder einem Acrylester gelöst sein können

Diese ungesättigten Polyester- oder Vinylester können thermisch (üblicherweise durch Peroxidkatalysatoren) oder mittels Strahlung, z. B durch UV-Licht mit Photoinitiatoren wie beispielsweise in der EP-A 23623 beschrieben, ausgehärtet werden. Auch so genannte Kombinationshärtungen mit einem für die thermische Härtung verwendeten Peroxidinitiator in Kombination mit Photoinitiatoren sind möglich und haben sich insbesondere bei großen Wandstärken der Auskleidungsschläuche als vorteilhaft erwiesen. Ein Verfahren für eine derartige sogenannte Kombinationshärtung ist beispielsweise in der EP-A 1262708 beschrieben.

Ein strahlungshärtender Auskleidungsschlauch weist üblicherweise eine lichtundurchlässige äußere Schutzfolie, eine mindestens für bestimmte Wellenlängenbereiche elektromagnetischer Strahlung durchlässige Innenfolie sowie eine mit einem Harz getränkte aushärtbare Lage auf, die zwischen der Innenfolie und der Außenfolie angeordnet ist. Der Aussenfolienschlauch soll verhindern, dass das zur Imprägnierung verwendete Harz aus der aushärtbaren Lage austritt und in die Umwelt gelangt. Dies setzt eine gute Dichtigkeit und Anbindung des äußeren Folienschlauchs an die harzgetränkte aushärtbare Lage voraus.

In den Auskleidungsschlauch wird zum Aushärten desselben eine Aushärtevorrichtung eingeführt, die eine Strahlungsquelle aufweist, und die durch den Auskleidungsschlauch geführt wird, um mit der Strahlungsenergie die Aushärtung der aushärtbaren Lagen des Auskleidungsschlauchs zu aktivieren bzw. vorzunehmen. Dabei ist eine vollständige Aushärtung der Auskleidungsschläuche von großer Bedeutung, d.h. es muss eine bestimmte Menge Strahlungsenergie an jeden Punkt des Auskleidungsschlauchs in diesen eingebracht werden. Die Menge an Strahlungsenergie hängt dabei von der Leistungsabgabe der Strahlungsquellen sowie der Geschwindigkeit ab, mit der diese durch den Auskleidungsschlauch durchgeführt werden.

Zur Bereitstellung von Strahlungsenergie werden oftmals UV-Strahlungsquellen, auch als UV-Strahler bezeichnet, verwendet. Diese werden auf ziehbaren Vorrichtungen montiert, sogenannten Lichterzügen, die mittels Kabeln oder Zugseilen durch die mit dem Auskleidungsschlauch ausgekleideten Leitungen gezogen werden.

Beim Betrieb von UV-Strahlern, und insbesondere von UV- Niederdruck-Gas-Entladungslampen, sind mehrere Punkte zu beachten. Zunächst ist es vor Inbetriebnahme erforderlich, die Heizwendeln des UV-Strahlers im Sinne einer Schonung vorzuheizen, so dass bereits Elektronen austreten. Danach sollte dem UV-Strahler eine Zündspannung als Impuls zugeführt werden, damit die lonisierung einsetzen und sich nach einer gewissen Zeit eine leuchtende Gassäule in dem UV-Strahler ausbilden kann, um ultraviolette Strahlen zu erzeugen. Im Betrieb des UV-Strahlers ist es schließlich zwingend erforderlich, den Betriebsstrom im Sinne einer Strombegrenzung zu begrenzen, um eine Zerstörung des UV-Strahlers zu vermeiden. Aufgrund seiner negativen Kennlinie besteht nämlich zwischen der Betriebsspannung und dem Betriebsstrom ein Zusammenhang derart, dass einem größeren Betriebsstrom eine kleinere Betriebsspannung zugeordnet ist.

Bei den oftmals als Strahlungsquelle verwendeten Gasentladungslampem, Kurzbogenlampen, Bogenlampe, insbesondere in Form von Xenon-Lampen, ist somit ein Vorschaltgerät notwendig, dass deren sicheren Betrieb ermöglicht. Auch für den Einsatz von LEDs als Strahlungsquelle kann ein Vorschalgerät zur Ansteuerung vorteilhaft sein.

Es ist bekannt, die zur Ausbildung der Gassäule erforderliche hohe Zündspannung bei Gasentladungslampen mit Hilfe einer Induktivität in Form einer Drossel zu erzeugen, die mit normaler Wechselspannung mit 50 Hz betrieben wird und die den Zündimpuls durch einen Schaltvorgang hervorruft, der bei einer Induktivität bekanntlich eine kurzzeitige hohe Spannung entstehen läßt. Nach erfolgter Zündung dient die Drossel zur erforderlichen Strombegrenzung des Betriebsstromes des UV-Strahlers.

Diesen Effekt machen sich konventionelle Vorschaltgeräte zu nutze, die Vorschaltdrossen sind, die bei Netzfrequenz arbeiten und aus einem Eisenkern mit Luftspalt und einer Kupfer- oder Aluminiumlackdraht-Wicklung bestehen. Bedingt durch den ohmschen Widerstand der Wicklung (die sogenannten Kupferverluste) und die Ummagnetisierungsvoränge im Kern kommt es zu Verlusten von etwa 10-20 % der Lampen-Nennleistung. Es entsteht Wärme in der Drossel.

Solche konventionellen Vorschaltgeräte werden gemäß dem Stand der Technik zur Leistungsbereitstellung für Strahlungsquellen zum Aushärten von Auskleidungsschläuchen verwendendet und stellen den aktuellen stand der Technik dar.

Nachteilig an den bekannten Vorrichtungen ist es dabei, dass jeder Strahlungsquelle eine Vorschalteinrichtung zugeordnet werden muss. Die beschriebenen Lichterzüge umfassen dabei mehrere Strahlungsquellen, so dass eine Vielzahl von Stromversorgungsleitungen zu den Strahlungsquellen in der zu sanierenden Leitung geführt werden müssen.

Da die Strahlungsquellen einen hohen Strom bedingen, werden elektrische Leitungen mit entsprechend großen Querschnitten benötigt. Da die zu sanierenden Leitungen bis zu mehreren hundert Metern lang sein können, macht sich dies u.a. aufgrund der hohen Kosten und des hohen Gewichts stark negativ bemerkbar.

Zur Lösung dieses Problems schlägt WO2017/060523 daher vor, dass Kabel mit kleinerem Querschnitt verwendet werden können, in dem das Vorschaltgerät direkt an dem Lichterzug bzw. in der Nähe der Strahlungsquelle selbst angeordent ist.

Somit wird eine räumliche Nähe zwischen Strahlungsquelle und Vorschaltgerät geschaffen, und es müssen keine langen Wege zwischen diesen beiden Einrichtugen überbrückt werden. Dies führt dazu, dass das Kabel vom dem Lichterzug zum Stromanschluss außerhalb des Kanals weniger Adern benötigt und zum eine höhere Spannung zum Einsatz kommen kann, die die Leitungsverluste verringert.

Im Ergebnis kann durch eine Anordnung der Vorschaltgeräte auf dem Lichterzug eine deutliche Reduzierung des Kabelquerschnitts erreicht werden.

Des weiteren ist aus EP 3 336 404 A1 eine Vorrichtung zum Aushärten von Linern in Rohrleitungen unter Verwendung einer Harzmasse, die mittels elektromagnetischer Strahlung ausgehärtet wird, und somit eine gattungsgemäße Vorrichtung bekannt. Die beschriebene Vorrichtung ist dabei mit einem zentralen polyedrischen Körper ausgestattet, der mit LEDs versehen ist, die die Strahlung zum Aushärtung des Liners erzeugen und Wellen mit Längen im Bereich von 200-500 nm emittieren können sollen, um das Aushärten der Harzmasse zu bewirken.

Da LEDs kein Vorschaltgerät benötigen, wird auch kein Bezug auf ein solches in D1 genommen.

Nachteilig an der Lösung gemäß dem Stand der Technik ist dabei nicht die Anordnung der Vorschaltgeräte auf dem Lichterzug und somit in der Nähe der Strahlungsquellen, sondern die Temperatur im Inneren der Auskleidungsschläuche bei der Aushärtung. Diese beeinflussen die Leistungsabgabe und Lebensdauer der Vorschaltgeräte stark negativ.

Daher lag die Aufgabe der vorliegenden Erfindung darin, die Nachteile des Standes der Technik zu überwinden und insbesondere eine Vorrichtung zu liefern, die eine Regelung der realen Leistungsabgabe der Strahlungsenergie der Strahlungsquellen ermöglicht, wobei die Vorrichtung in einem für diese optimalen Temperaturbereich betrieben wird.

Diese Aufgabe wird gelöst durch eine Vorrichtung gemäß Anspruch 1.

Leistungskontrollvorrichtungen dürfen nur innerhalb bestimmter Temperaturbereiche betrieben werden, höherer Temperaturen führen zu höheren Widerständen in der Leistungskontrollvorrichtung und somit einem höheren Energieverbrauch sowie zur Reduktion der Lebensdauer.

Gemäß dem Stand der Technik wurden Leistungskonstrollvorrichtungen außerhalb der auszuhärtenden Auskleidungsschläuche angeordnet. Innerhalb der Auskleidungsschläuche entsteht jedoch aufgrund der hohen Temperaturen bei der Aushärtung und fehlender Luftströme eine starke Erhitzung, die für einen sicheren Betrieb der Leistungskontrollvorrichtungen abgeführt werden muss.

Der Erfindung lang dabei die überraschende Erkennist zugrunde, dass es sich als vorteihaft erwiesen hat, die auf den Transportvorrichtungen angeordneten Leistungskontrollvorrichtungen durch Kühlvorrichtungen zu kühlen und vor eine Tempertur oberhalb des zugelassenen Bereichs zu schützen.

Somit kann sichergestellt werden, dass die Leistungskontrollvorrichtungen optimal arbeiten und ihre maximale Lebenszeit erhalten bleibt. Insbesonders wird sichergestelt, dass die Strahlungsquellen gemäß den Vorgaben mit Leistung versorgt werden und die Leistungsabgabe der Strahlungsquellen aufgrund zu hoher Temperaturen nicht zurückggeht.

Dabei kann insbesondere vorgesehen sein, dass die Kühlvorrichtung einen Kühlkörper mit vorzugsweise Kühlrippen umfasst, insbesondere einen Kühlkörper umfassend oder bestehend aus Metall, Kunststoff und/oder Keramik.

Es hat sich gezeigt, dass ein Kühlkörper aus Metall, Kunststoff und/der Keramik, insbesondere ein Kühlkörper mit Kühlrippen, gut geeignet ist, die Wärme von der Strahlungsquelle und/oder der Leistungskontrolleinrichtung wegzuführen.

Solche Kühlkörper lassen sich besonders gut mit Ventilatoren etc. kombinieren, um die Kühlung weiter zu verbessern.

Auch sind sogenannte elektrothermischer Wandler basierend auf dem Peltier-Effekt gut zur Kühlung der Strahlungsquellen und/oder der Leistungskontrollvorrichtung geeignet. Diese werden auf der einen Seite kühl und auf der anderen Seite warm, wenn sie von einem Strom durchflossen werden.

Besonders vorteilhaft kann dabei eine Kombination von Kühlkörpern mit thermoelektrischen Wandlern sein.

Erfindungsgemäß kann es auch vorteilhaft sein, dass die Kühlvorrichtung als aktive Kühlvorrichtung ausgebildet ist und in einem Kühlkreislauf ein Kältemittel umgewälzt wird, das an temperaturkritischen Komponenten der mindestens Strahlungsquelle und/oder der mindestens einen Leistungskontrollvorrichtung direkt und/oder indirekt, insbesondere mittels Leitungen und/oder mittels des Kühlkörpers, vorbeigeführt wird.

Aktive Kühlvorrichtungen mit einem Kühlmittel haben sich auch als vorteilhaft erwiesen. Auch diese können mit elektrothermischen Wandlern kombiniert werden, bieten jedoch für die angedachten Anwendungsfälle in der Regel bereits eine ausreichend große Kühlleistungen um einen optimalen Betrieb der Strahlungsquellen und/oder der Leistungskontrollvorrichtungen sicherzustellen.

Dabei kann es insbesondere vorgesehen sein, dass als Strahlungsquelle eine Gasentladungslampe, eine Kurzbogenlampe, eine Stroboskoplampe, eine Blitzlampe, eine Bogenlampe, insbesondere eine Xenon-Lampe, eine Quecksilber-Xenon-Lampe, ein oder mehrere Laser und/oder mindestens eine, insbesondere eine Vielzahl von, LEDs eingesetzt wird, wobei insbesondere das Leuchtmittel der Strahlungsquelle mindestens fünfzig Prozent (50%) der Strahlungsenergie in einem Wellenlängenbereich von 351 bis 800 nm, insbesondere in einem Bereich von 380 nm bis 800 nm, insbesondere in einem Bereich von 380 nm bis 700 nm, bevorzugt in einem Bereich von 390 nm bis 470 nm, oder in einem Bereich von 400 nm bis 800 nm, bereitstellt.

Gemäß einer Ausführugsform der vorliegenden Erfindung kann es vorgesehen sein, dass die Leistungskontrollvorrichtung ein analoges und/oder digitales Vorschaltgeräts umfasst oder ausbildet, wobei die Leistungskontrollvorrichtung insbesondere eine Zündeinrichtung zum Zünden der Strahlungsquelle umfasst.

Die erfindungsgemäße Leistungskontrollvorrichtung kann dabei ausgelegt und eingerichtet sein, um eine Leistungsabgabe in einem breiten Spektrum zu ermöglichen, so dass unterschiedliche Strahlungsquellen mit dieser betrieben werden können, von eine Gasentlandungslampe bis hin zu LEDs. Die Leistungsabgabe der Leistungskontrollvorrichtung ist dabei bevorzugt begrenzt bei maximal 5000W, bevorzugt bei 4000W, wobei die Leistungsabgabe bis zur maximalen Leistungsabgabe frei eingestellt werden kann.

Es kann dabei erfindungsgemäß vorteilhaft sein, dass der Soll-Parameter festlegbare Werte für die Soll-Ausgangspannung, den Soll-Ausgangsstrom, die Soll-Ausgangsleistung und/oder die Soll-Ausgangsfrequenz umfasst.

Alle diese Parameter dienen der Festlegung der Leistungsabgabe und der Optimierung des Aushärtevorgangs.

Auch kann vorgesehen sein, dass die Leistungskontrollvorrichtung netzseitig mit einer, insbesondere einphasen oder dreiphasigen, Netzspannung von 230V bis 530V mit einer Netzfrequenz von 48Hz bis 62Hz beaufschlagbar oder beaufschlagt ist und ausgangsseitig eine Spannung von maximal 585V, insbesondere von maximal 450V, und einen Ausgangsstrom von maximal 28,5 Ampere, insbesondere von maximal 22 Ampere, bereitstellt.

Zum Aushärten der Auskleidungsschläuche sind hohe Strahlungsenergien notwendig. Um die benötigten Leistungen bereitzustellen, wird die Leistungskontrollvorrichtung bevozugt auf der netzseitigen Einganseite mit einer, insbesondere einphasigen oder dreiphasigen, Netzspannung von 230V bis 530V beaufschlagt.

Auch kann es erfindungsgemäß vorgesehen sein, dass die Strahlungsquelle und die Leistungskontrollvorrichtung auf einer Transportvorrichtung angeordnet sind, die Räder umfasst, wobei die Transportvorrichtung mittels eines Kabels, insbesondere eines Kabels umfassend Kevlarfasern und/oder mindestens ein Zugseil, und/oder eines Zugseils durch die zu sanierenden Leitung gezogen werden kann, um den Auskleidungsschlauch auszuhärten.

Wie beschrieben werden zum Aushärten von Auskleidungsschläuchen sogenannte Lichterzüge eingesetzt. Diese werden vorzugsweise mittels Kabeln oder Zugseilen durch die Auskleidungsschläuche gezogen, wobei die auf diesen angeordneten Strahlungsquellen während des Durchfahrens der zu sanierenden Leitung den Auskleidungsschlauch Stück für Stück aushärten.

Die Lichterzüge selbst können dabei mehrere Wagen umfassen, die miteinander verbunden sind. Erfindungsgemäß kann dabei vorgesehen sein, dass die jeweiligen Leistungskontrollvorrichtungen auf den einzelnen Wagen mittels einem zentralen externen Stromversorgungskabels verbunden sind.

Die abgegebene Strahlungsenergie zum Aushärten des Auskleidungsschlauchs an einem Ort richtet sich nicht nur nach der Leistung der Strahlungsquellen, sondern auch nach der Beleuchtungszeit. Daher ist es vorteilhaft, die Geschwindigkeit des Vortriebs der Strahlungsquelle zu erfassen und dies als Parameter für die Einstellung der Leistungsabgabe der Leistungskontrollvorrichtungen zu verwenden.

Auch kann es vorgesehen sein, dass die Leistungskontrollvorrichtung die Geschwindigkeit des Vortriebs, die Position der Transportvorrichtung in der zu sanierenden Leitung und/oder die abgegeben Ist-Leistung der Strahlungsquelle speichert.

Eine solche Aufzeichnung von Messdaten ist besonders vorteilhaft, um den korrekten Aushärteprozess zu dokumentieren.

Vorrichtung nach einem der vorangehenden Ansprüche, dadurch
gekennzeichnet, dass
jeder Strahlungsquelle und/oder mindestens zwei Gruppen von Strahlungsquellen umfassend N Strahlungsquellen, mit N = 1, 2, 3, 4, 5, 6, 7, 8, 9, oder 10, auf der Transportvorrichtung jeweils eine korrespondierende Leistungskontrollvorrichtung zugeordnet ist.

Die Anzahl der Strahlungsquellen kann an die Art und den Aufbau sowie den Durchmesser der Strahlungsquellen angepasst werden, um eine optimale Aushärtung der Auskleidungsschläuche zu ermöglichen.

Es kann dabei vorgesehen sein, dass die Strahlungsquellen um einem Mittelpunktswinkel α der Transporvorrichtung von 15, 20, 30, 45, 60, 90, oder 120° versetzt zueinander angeordnet sind, vorzugsweise jeweils 3 Strahlungsquellen versetzt um einen Mittelpunktswinkel α von 120° angeordnet sind, wobei insbesondere die Leistungskontrollvorrichtung bzw. die Leistungskontrollvorrichtungen benachtbart zu der jeweiligen Strahlungsquelle auf deren oder benachbart zu deren dem Transportvorrichtungsinneren zugewandten Seite angeordnet sind.

Durch eine erfindungsgemäße kreisförmige Anordnung der Strahlungsquellen um die mindestens eine erste und/oder zweite Befestigungseinrichtung kann es ermöglicht werden, dass eine vollständige Aushärtung der Auskleidungsschläuche erfolgt. Als besonders vorteilhaft hat sich dabei eine Anordnung von drei um jeweils 120° versetzte Strahlungsquellen erwiesen.

Des weiteren kann es vorteilhaft sein, dass mindestens ein Soll-Parameter repräsentativ für die gewünschte elektrische Leistungsaufnahme durch die Strahlungsquelle an der Leistungskontrollvorrichtung einstellbar oder eingestellt ist, und die von der mindestens einen Strahlungsquelle aufgenommene Ist-Leistung mittels einer Messeinrichtung gemessen und permanent mit dem Soll-Parameter verglichen wird, wobei im Falle einer Unterschreitung des Soll-Parameter die Leistungskontrollvorrichtung die Leistungsabgabe erhöht und im Falle einer Überschreitung des Soll-Parameteres reduziert wird, und wobei die tatsächliche Leistungsabgabe der Leistungskontrollvorrichtung von dem vorgegebenen Soll-Parameter abweichen kann, so dass die Ist-Leistung der Strahlungsquelle mit dem Soll-Parameter übereinstimmt.

Auch kann es erfindungsgemäß vorteilhaft sein, dass die Vorrichtung mittels mindestens eines Kabels mit einer außerhalb des Leitungssystems angeordneten Steuerungsvorrichtung verbunden ist, wobei das oder die Kabel mindestens zwei oder oder mehr Adern als Stromversorgungsleitung sowie zwei oder mehr Leiter als Datenleitung umfasst.

Dabei kann vorgesehen sein, dass mindestens zwei, insbesondere alle, Kabel der Leistungskontrollvorrichtungen elektrisch parallel mit den Adern der Stromversorgungsleitung geschaltet sind.

Es hat sich gezeigt, dass die erfindungsgemäßen Leistungskontrollvorrichtungen mittels weniger Adern in einem Kabel parallel mit der externen Stromversorgungseinrichtung verbunden werden können. Dies hat vorallem den Vorteil, dass ein kleineres Kabel mit weniger Adern zum Einsatz kommen kann, als wenn die Leistungskontrollvorrichtungen außerhalb des Auskleidungsschlauchs angeordnet wären und somit eine separate Verbindung zwischen jeder Strahlungsquelle und jeder Leistungskontrollvorrichtung hergestellt werden müsste.

Es kann gemäß einer Ausführungsform der vorliegenden Erfindung auch vorgesehen sein, dass die Transportvorrichtung mindestens eine Temperaturmesseinrichtung umfasst, insbesondere mindestens jeweils eine Temperaturmesseinrichtung angeordnet am vorderen Ende, am hinteren Ende und in der Mitte der Transportvorrichtung, wobei die Messwerte der mindestens einen Temperaturmessvorrichtung an die Leistungskontrollvorrichtung übermittelt und insbesondere gespeichert werden und/oder mindestens eine Temperaturmesseinrichtung an jeder der Strahlungsquellen und/oder jedem der Leistungskontrollvorrichtungen angeordnet ist, wobei bevorzugt mindestens eine, insbesondere jede der aktiven Kühleinrichtungen in Abhängigkeit der Messwerte der Temperaturmessvorrichtungen geregelt sind

Schließlich liefert die Erfindung eine Verwendung einer erfindungsgemäßen Vorrichtung zum Aushärten von Auskleidungsschläuchen.

Weitere Merkmale und Vorteile der Erfindung ergeben sich aus der nachfolgenden Beschreibung, in der ein Ausführungsbeispiel der Erfindung anhand einer schematischen Zeichnung beispielhaft erläutert wird, ohne dadurch die Erfindung zu beschränken:

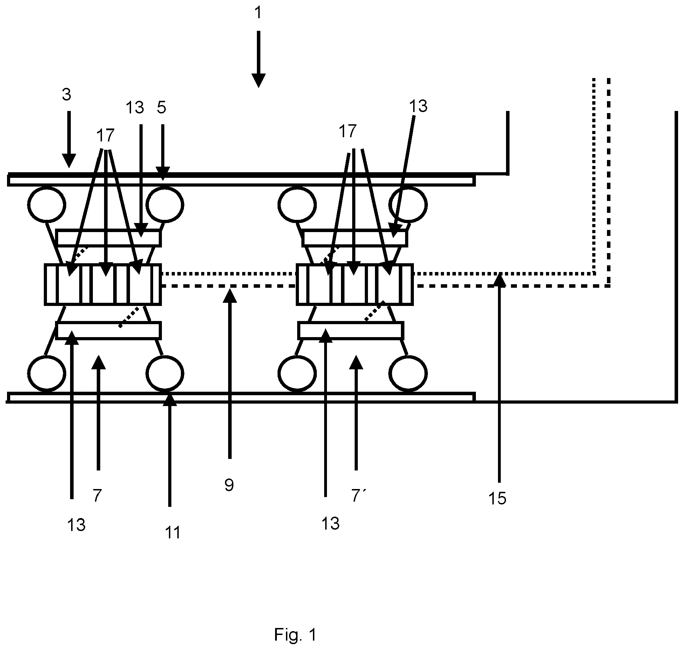

Fig. 1: eine schematische Seitenansicht einer Ausführungsform einer erfindungsgemäßen Vorrichtung

In Figur 1 ist eine Vorrichtung 1 zur Aushärtung von einem in eine Leitung 3 eingeführten harzgetränkten Auskleidungsschläuchen 5 mit energiereicher Strahlung gezeigt. Die Vorrichtung 1 umfasst dabei Transportvorrichtungen 7, 7', die mittels eines Zugseils 9 miteinander verbunden sind und auch mittels diesem durch die Leitung 3 geführt werden können.

Die Transportvorrichtungen 7,7' werden dabei zudem mittels Rädern 11, die an der Innenwandung des Auskleidungsschlauchs 5 anliegen, geführt.

Auf den Transporvorrichtungen 7,7' sind Strahlungsquellen 13 angeordnet, die zur Erzeugung energiereicher Strahlung dienen. Jeder Strahlungsquelle 13 ist dabei eine Leistungskontrollvorrichtung 17 zugeordnet, die ebenfalls auf der Transportvorrichtung 7,7'angeordnet ist. Die Leistungskontrollvorrichtungen 17 dienen dabei zur Regelung der elektrischen Leistungsabgabe an die Strahlungsquelle, 13, wobei wie aus der Figur offensichtlich die Strahlungsquellen 13 und die Leistungskontrollvorrichtungen 17 gemeinsam auf durch den Auskleidungsschlauch bewegt werden. Die Energieversorgung der Strahlungsquellen erfolgt dabei über eine Parallelschaltung der Leistungskontrollvorrichtungen mit dem Stromversorgungskabel 15.

Nicht gezeigt ist, dass mindestens eine Kühlvorrichtung umfasst ist, die in Wirkverbindung mit den Strahlungsquellen 13 und/oder den Leistungskontrollvorrichtungen steht, um diese zu zu kühlen.

## Patentansprüche

1. Vorrichtung (1) zur Aushärtung von harzgetränkten Auskleidungsschläuchen (5) mit energiereicher Strahlung, umfassend mindestens eine Strahlungsquelle (13) zur Erzeugung energiereicher Strahlung und mindestens eine Leistungskontrollvorrichtung (17) zur Regelung der elektrischen Leistungsabgabe an die mindestens eine Strahlungsquelle (13), wobei die mindestens eine Strahlungsquelle (13) und die mindestens eine Leistungskontrollvorrichtung (17) gemeinsam auf einer durch den Auskleidungsschlauch (5) bewegbaren Transportvorrichtung (7) angeordnet sind, **dadurch gekennzeichnet, dass**
mindestens eine Kühlvorrichtung umfasst ist, die in Wirkverbindung mit der mindestens einen Leistungskontrollvorrichtung (17) steht, um die mindestens eine Strahlungsquelle (13) zu kühlen.

2. Vorrichtung (1) nach Anspruch 1, **dadurch gekennzeichnet, dass**
die Kühlvorrichtung einen Kühlkörper mit vorzugsweise Kühlrippen umfasst, insbesondere einen Kühlkörper umfassend oder bestehend aus Metall, Kunststoff und/oder Keramik.

3. Vorrichtung (1) nach Anspruch 1 oder Anspruch 2, **dadurch gekennzeichnet, dass**
die Kühlvorrichtung als aktive Kühlvorrichtung ausgebildet ist und in einem Kühlkreislauf ein Kältemittel umgewälzt wird, das an temperaturkritischen Komponenten der mindestens Strahlungsquelle (13) und/oder der mindestens einen Leistungskontrollvorrichtung (17) direkt und/oder indirekt, insbesondere mittels Leitungen und/oder mittels des Kühlkörpers, vorbeigeführt wird.

4. Vorrichtung (1) nach einem der vorangehenden Ansprüche, **dadurch gekennzeichnet, dass**
als Strahlungsquelle (13) eine Gasentladungslampe, eine Kurzbogenlampe, eine Stroboskoplampe, eine Blitzlampe, eine Bogenlampe, insbesondere eine Xenon-Lampe, eine Quecksilber-Xenon-Lampe, ein oder mehrere Laser und/oder mindestens eine, insbesondere eine Vielzahl von, LEDs eingesetzt wird, wobei insbesondere das Leuchtmittel der Strahlungsquelle mindestens fünfzig Prozent (50%) der Strahlungsenergie in einem Wellenlängenbereich von 351 bis 800 nm, insbesondere in einem Bereich von 380 nm bis 800 nm, insbesondere in einem Bereich von 380 nm bis 700 nm, bevorzugt in einem Bereich von 390 nm bis 470 nm, oder in einem Bereich von 400 nm bis 800 nm, bereitstellt.

5. Vorrichtung (1) nach einem der vorangehenden Ansprüche, **dadurch gekennzeichnet, dass**
die Leistungskontrollvorrichtung (17) ein analoges und/oder digitales Vorschaltgeräts umfasst oder ausbildet, wobei die Leistungskontrollvorrichtung insbesondere eine Zündeinrichtung zum Zünden der Strahlungsquelle umfasst.

6. Vorrichtung (1) nach einem der vorangehenden Ansprüche, **dadurch**
**gekennzeichnet, dass**
jeder Strahlungsquelle (13) und/oder mindestens zwei Gruppen von Strahlungsquellen (13) umfassend N Strahlungsquellen (13), mit N = 1, 2, 3, 4, 5, 6, 7, 8, 9, oder 10, auf der Transportvorrichtung jeweils eine korrespondierende Leistungskontrollvorrichtung (17) zugeordnet ist.

7. Vorrichtung (1) nach einem der vorangehenden Ansprüche, **dadurch**
**gekennzeichnet, dass**
die Strahlungsquellen (13) um einem Mittelpunktswinkel α der Transportvorrichtung (7,7') von 15, 20, 30, 45, 60, 90, oder 120° versetzt zueinander angeordnet sind, vorzugsweise jeweils 3 Strahlungsquellen (13) versetzt um einen Mittelpunktswinkel α von 120° angeordnet sind, wobei insbesondere die Leistungskontrollvorrichtung (17) bzw. die Leistungskontrollvorrichtungen (17) benachtbart zu der jeweiligen Strahlungsquelle (13) auf deren oder benachbart zu deren dem Transportvorrichtungsinneren zugewandten Seite angeordnet sind.

8. Vorrichtung (1) nach einem der vorangehenden Ansprüche, **dadurch**
**gekennzeichnet, dass**
mindestens ein Soll-Parameter repräsentativ für die gewünschte elektrische Leistungsaufnahme durch die Strahlungsquelle (13) an der Leistungskontrollvorrichtung (17) einstellbar oder eingestellt ist, und die von der mindestens einen Strahlungsquelle (13) aufgenommene Ist-Leistung mittels einer Messeinrichtung gemessen und permanent mit dem Soll-Parameter verglichen wird, wobei im Falle einer Unterschreitung des Soll-Parameter die Leistungskontrollvorrichtung (17) die Leistungsabgabe erhöht und im Falle einer Überschreitung des Soll-Parameteres reduziert wird, und wobei die tatsächliche Leistungsabgabe der Leistungskontrollvorrichtung (17) von dem vorgegebenen Soll-Parameter abweichen kann, so dass die Ist-Leistung der Strahlungsquelle mit dem Soll-Parameter übereinstimmt.

9. Vorrichtung (1) nach einem der vorangehenden Ansprüche, **dadurch**
**gekennzeichnet, dass**
die Vorrichtung (1) mittels mindestens eines Kabels mit einer außerhalb des Leitungssystems angeordneten Steuerungsvorrichtung verbunden ist, wobei das oder die Kabel mindestens zwei oder oder mehr Adern als Stromversorgungsleitung sowie zwei oder mehr Leiter als Datenleitung umfasst.

10. Vorrichtung (1) nach Anspruch 9, **dadurch gekennzeichnet, dass**
mindestens zwei, insbesondere alle, Adern der Leistungskontrollvorrichtungen (17) elektrisch parallel mit den Adern der Stromversorgungsleitung geschaltet sind.

11. Vorrichtung (1) nach einem der vorangehenden Ansprüche, **dadurch**
**gekennzeichnet, dass**
die Transportvorrichtung (7, 7') mindestens eine Temperaturmesseinrichtung umfasst, insbesondere mindestens jeweils eine Temperaturmesseinrichtung angeordnet am vorderen Ende, am hinteren Ende und in der Mitte der Transportvorrichtung (7, 7'), wobei die Messwerte der mindestens einen Temperaturmessvorrichtung an die Leistungskontrollvorrichtung (17) übermittelt und insbesondere gespeichert werden und/oder mindestens eine Temperaturmesseinrichtung an jeder der Strahlungsquellen (13) und/oder jedem der Leistungskontrollvorrichtungen (7) angeordnet ist, wobei bevorzugt mindestens eine, insbesondere jede der aktiven Kühleinrichtungen in Abhängigkeit der Messwerte der Temperaturmessvorrichtungen geregelt sind..

12. Verwendung einer Vorrichtung (1) nach einem der vorangehenden Ansprüche zum Aushärten von Auskleidungsschläuchen (5).

## Claims

1. A device (1) for curing resin-impregnated liner hoses (5) with high-energy radiation, comprising at least one radiation source (13) for generating high-energy radiation and at least one power control device (17) for regulating the electrical power output to the at least one radiation source (13), wherein the at least one radiation source (13) and the at least one power control device (17) are jointly arranged on a transport device (7) movable through the liner hose (5), **characterized in that** at least one cooling device is included, which is operatively connected to the at least one power control device (17) to cool the at least one radiation source (13).

2. The device (1) according to claim 1, **characterized in that** the cooling device comprises a heat sink, preferably with cooling fins, in particular a heat sink comprising or consisting of metal, plastic, and/or ceramic.

3. The device (1) according to claim 1 or claim 2, **characterized in that** the cooling device is designed as an active cooling device and a coolant is circulated in a cooling circuit, which is conducted past temperature-critical components of the at least one radiation source (13) and/or the at least one power control device (17) directly and/or indirectly, in particular by means of lines and/or by means of the heat sink.

4. The device (1) according to any of the preceding claims, **characterized in that** a gas discharge lamp, a short-arc lamp, a stroboscopic lamp, a flash lamp, an arc lamp, in particular a xenon lamp, a mercury-xenon lamp, one or more lasers, and/or at least one, particularly a plurality of, LEDs are used as the radiation source (13), wherein particularly the light source of the radiation source provides at least fifty percent (50%) of the radiation energy in a wavelength range of 351 to 800 nm, in particular in a range of 380 nm to 800 nm, in particular in a range of 380 nm to 700 nm, preferably in a range of 390 nm to 470 nm, or in a range of 400 nm to 800 nm.

5. The device (1) according to any of the preceding claims, **characterized in that** the power control device (17) comprises or forms an analog and/or digital ballast, wherein the power control device particularly comprises an ignition device for igniting the radiation source.

6. The device (1) according to any of the preceding claims, **characterized in that** each radiation source (13) and/or at least two groups of radiation sources (13) comprising N radiation sources (13), with N = 1, 2, 3, 4, 5, 6, 7, 8, 9, or 10, are each assigned a corresponding power control device (17) on the transport device.

7. The device (1) according to any of the preceding claims, **characterized in that** the radiation sources (13) are arranged offset from each other by a central angle α of the transport device (7, 7'), with α = 15, 20, 30, 45, 60, 90, or 120°, preferably three radiation sources (13) are arranged offset by a central angle α of 120°, wherein particularly the power control device (17) or the power control devices (17) are arranged adjacent to the respective radiation source (13) on or adjacent to the side facing the interior of the transport device.

8. The device (1) according to any of the preceding claims, **characterized in that** at least one target parameter representative of the desired electrical power consumption by the radiation source (13) is adjustable or set on the power control device (17), and the actual power consumed by the at least one radiation source (13) is measured by a measuring device and permanently compared with the target parameter, wherein in the case of a deviation below the target parameter, the power control device (17) increases the power output and in the case of an excess of the target parameter, reduces it, and wherein the actual power output of the power control device (17) may deviate from the specified target parameter so that the actual power consumption of the radiation source matches the target parameter.

9. The device (1) according to any of the preceding claims, **characterized in that** the device (1) is connected by means of at least one cable to a control device arranged outside the line system, wherein the cable or cables comprise at least two or more wires as a power supply line and two or more conductors as a data line.

10. The device (1) according to claim 9, **characterized in that** at least two, particularly all, wires of the power control devices (17) are electrically connected in parallel with the wires of the power supply line.

11. The device (1) according to any of the preceding claims, **characterized in that** the transport device (7, 7') comprises at least one temperature measuring device, particularly at least one temperature measuring device arranged at the front end, at the rear end, and in the middle of the transport device (7, 7'), wherein the measurement values of the at least one temperature measuring device are transmitted to the power control device (17) and particularly stored and/or at least one temperature measuring device is arranged at each of the radiation sources (13) and/or each of the power control devices (7), wherein preferably at least one, particularly each of the active cooling devices, is regulated based on the measurement values of the temperature measuring devices.

12. Use of a device (1) according to any of the preceding claims for curing liner hoses (5).

## Revendications

1. Dispositif (1) pour le durcissement de tuyaux de revêtement imprégnés de résine (5) avec des radiations à haute énergie, comprenant au moins une source de radiation (13) pour générer des radiations à haute énergie et au moins un dispositif de contrôle de puissance (17) pour réguler la sortie de puissance électrique vers la ou les sources de radiation (13), où la ou les sources de radiation (13) et le ou les dispositifs de contrôle de puissance (17) sont conjointement disposés sur un dispositif de transport (7) déplaçable à travers le tuyau de revêtement (5), **caractérisé en ce qu'**au moins un dispositif de refroidissement est inclus, qui est en connexion opérationnelle avec le ou les dispositifs de contrôle de puissance (17) pour refroidir la ou les sources de radiation (13),

2. Dispositif (1) selon la revendication 1, **caractérisé en ce que** le dispositif de refroidissement comprend un dissipateur thermique, de préférence avec des ailettes de refroidissement, en particulier un dissipateur thermique comprenant ou consistant en métal, plastique et/ou céramique.

3. Dispositif (1) selon la revendication 1 ou 2, **caractérisé en ce que** le dispositif de refroidissement est conçu comme un dispositif de refroidissement actif et un fluide frigorigène est circulé dans un circuit de refroidissement, qui est conduit près des composants critiques en température de la ou des sources de radiation (13) et/ou du ou des dispositifs de contrôle de puissance (17) directement et/ou indirectement, en particulier par des lignes et/ou par le biais du dissipateur thermique.

4. Dispositif (1) selon l'une des revendications précédentes, **caractérisé en ce qu'**une lampe à décharge gazeuse, une lampe à arc court, une lampe stroboscopique, une lampe flash, une lampe à arc, en particulier une lampe au xénon, une lampe au mercure-xénon, un ou plusieurs lasers, et/ou au moins une, en particulier une pluralité de, LED sont utilisés comme source de radiation (13), où en particulier la source lumineuse de la source de radiation fournit au moins cinquante pour cent (50%) de l'énergie de radiation dans une plage de longueurs d'onde de 351 à 800 nm, en particulier dans une plage de 380 nm à 800 nm, en particulier dans une plage de 380 nm à 700 nm, de préférence dans une plage de 390 nm à 470 nm, ou dans une plage de 400 nm à 800 nm.

5. Dispositif (1) selon l'une des revendications précédentes, **caractérisé en ce que** le dispositif de contrôle de puissance (17) comprend ou forme un ballast analogique et/ou numérique, où le dispositif de contrôle de puissance comprend en particulier un dispositif d'allumage pour allumer la source de radiation.

6. Dispositif (1) selon l'une des revendications précédentes, **caractérisé en ce que** chaque source de radiation (13) et/ou au moins deux groupes de sources de radiation (13) comprenant N sources de radiation (13), avec N = 1, 2, 3, 4, 5, 6, 7, 8, 9, ou 10, se voient chacun attribuer un dispositif de contrôle de puissance correspondant (17) sur le dispositif de transport.

7. Dispositif (1) selon l'une des revendications précédentes, **caractérisé en ce que** les sources de radiation (13) sont disposées décalées les unes des autres d'un angle central α du dispositif de transport (7, 7'), avec α = 15, 20, 30, 45, 60, 90, ou 120°, de préférence trois sources de radiation (13) sont disposées décalées d'un angle central α de 120°, où en particulier le dispositif de contrôle de puissance (17) ou les dispositifs de contrôle de puissance (17) sont disposés adjacents à la source de radiation respective (13) sur ou adjacents au côté faisant face à l'intérieur du dispositif de transport.

8. Dispositif (1) selon l'une des revendications précédentes, **caractérisé en ce qu'**au moins un paramètre cible représentatif de la consommation électrique souhaitée par la source de radiation (13) est réglable ou défini sur le dispositif de contrôle de puissance (17), et la puissance réelle consommée par la ou les sources de radiation (13) est mesurée par un dispositif de mesure et constamment comparée au paramètre cible, où en cas de déviation en dessous du paramètre cible, le dispositif de contrôle de puissance (17) augmente la sortie de puissance et en cas de dépassement du paramètre cible, la réduit, et où la sortie de puissance réelle du dispositif de contrôle de puissance (17) peut dévier du paramètre cible spécifié de sorte que la consommation réelle de la source de radiation corresponde au paramètre cible.

9. Dispositif (1) selon l'une des revendications précédentes, **caractérisé en ce que** le dispositif (1) est connecté par le biais d'au moins un câble à un dispositif de contrôle disposé à l'extérieur du système de conduites, où le ou les câbles comprennent au moins deux ou plusieurs fils comme ligne d'alimentation électrique et deux ou plusieurs conducteurs comme ligne de données.

10. Dispositif (1) selon la revendication 9, **caractérisé en ce qu'**au moins deux, en particulier tous, les fils des dispositifs de contrôle de puissance (17) sont connectés électriquement en parallèle avec les fils de la ligne d'alimentation électrique.

11. Dispositif (1) selon l'une des revendications précédentes, **caractérisé en ce que** le dispositif de transport (7, 7') comprend au moins un dispositif de mesure de température, en particulier au moins un dispositif de mesure de température disposé à l'extrémité avant, à l'extrémité arrière et au milieu du dispositif de transport (7, 7'), où les valeurs mesurées du ou des dispositifs de mesure de température sont transmises au dispositif de contrôle de puissance (17) et en particulier stockées et/ou au moins un dispositif de mesure de température est disposé sur chaque source de radiation (13) et/ou chaque dispositif de contrôle de puissance (7), où de préférence au moins un, en particulier chacun des dispositifs de refroidissement actifs, est régulé en fonction des valeurs mesurées des dispositifs de mesure de température.

12. Utilisation d'un dispositif (1) selon l'une des revendications précédentes pour le durcissement de tuyaux de revêtement (5).
